# EUROPEAN PATENT SPECIFICATION

(11) **EP 0 868 623 B1**
(45) Date of publication and mention of the grant of the patent: **28.08.2002**
(21) Application number: 96943976.9
(22) Date of filing: 16.12.1996
(51) Int. Cl.: F16L 3/12, F16L 3/13, F16L 3/08

(54) **MONOLITHIC TUBE CLAMP MADE OF PLASTICS**
MONOLITHISCHE ROHRKLEMME AUS KUNSTSTOFF
PINCE POUR TUBE MONOLITHE EN PLASTIQUE

(30) Priority: 22.12.1995 IT PD950250
(43) Date of publication of application: 07.10.1998
(73) Proprietor: Fischerwerke Artur Fischer GmbH & Co. KG, 72178 Waldachtal (DE)
(72) Inventor: MORASSUTTI, Paolo, I-35122 Padova (IT); CECCHINATO, Paolo, I-32100 Treviso (IT)
(74) Representative: Modiano, Guido, Dr.-Ing.
(86) International application number: EP9605654
(87) International publication number: WO97023744

(56) References cited:
- GB-A- 2 185 066
- US-A- 4 291 855
- US-A- 5 277 387

## Description

### Technical Field

The present invention relates to a monolithic tube clamp made of plastics.

### Background Art

Conventional monolithic or non-monolithic tube clamps, despite being commercially available in a wide range of different models, can be grouped into two basic functional types: non-automatic tube clamps and automatic tube clamps.

In particular, non-automatic tube clamps have a structure which substantially comprises a base which can be anchored and from which one or more wings extend; said wings are fixed, at their corresponding free ends, to each other or to the base through disengageable or non-disengageable fixing means, such as for example bolts, hooks, etcetera.

In these non-automatic devices, the installer must first of all arrange the tube correctly and then fix the various closure means manually or by means of tools.

A certain awkwardness for the installer is therefore evident, since he must simultaneously support the tube during the fixing operation.

In these cases, in addition to a certain slowness in the overall tube fitting operation, it is often necessary to have several workers assigned to a single portion of tube to be fixed.

The above-mentioned automatic tube clamps have been devised in order to simplify the tube fitting operation, which includes both positioning and fixing, and to make it quicker and more precise.

Structurally, said tube clamps comprise a base which can be anchored and from which one or more wings (generally two) extend; said wings are actuated so as to close automatically when the tube is positioned and pushed into the seat formed by the wings by means of structural components the shape and functional concept whereof can vary considerably from one model to the next.

Although the prior art includes many embodiments of these structural components, the market has substantially selected two main kinds.

A first kind uses tabs which are fixed with respect to the wings and are arranged at the corresponding inner surfaces of said wings; when the tube is inserted, said tabs are pushed by the tube against the anchoring base and accordingly induce an elastic deformation of the corresponding wings, forcing them to engage at their free ends, usually by means of two mutually opposite hooks.

A second type provides for two wings which form the seat for the tube, each wing being articulated to the anchoring base in one of its median points.

When the tube is inserted and pushed against the anchoring base, the tube in turn pushes the portions of the two wings delimited by their ends which are adjacent to the anchoring base and by the corresponding articulation points.

In this manner, a first-class lever is clearly provided wherein the fulcrum can be found in the articulation region, the force is located in said portions against which the tube is pushed, and the resistance can be located at the ends of the two wings that are opposite to the anchoring base, which are generally shaped so as to form two mutually opposite hooks.

By pushing the tube beyond its standard position, therefore, the two hooks engage one another in a snap-together fashion.

The above-mentioned types of automatic tube clamp are not free from drawbacks although they perform their intended task.

These types of automatic tube clamp do not retain the tube around its entire perimeter; because of their structural functionality, said clamps must in fact have an open portion located at the anchoring base.

US-5,277,387 discloses a tube clamp as defined in the preamble of claim 1.

A principal aim of the present invention is to provide a tube clamp which provides better retention when the tube is in the standard position.

Accordingly, an object of the present invention is to provide a tube clamp which can adapt to the size tolerances of tubes without thereby reducing the quality of the fixing action.

Another object of the present invention is to provide a tube clamp which provides retention around the entire circumference of the tube.

A further object of the present invention is to provide a tube clamp having a competitive cost with respect to the conventional ones.

Another object of the present invention is to provide a tube clamp which can be manufactured with conventional technologies.

This aim, these objects, and others which will become apparent hereinafter are achieved by a monolithic tube clamp made of plastics, as defined in claim 1.

Further characteristics and advantages of the present invention will become apparent from the following detailed description of an embodiment thereof, illustrated only by way of non-limitative example in the accompanying drawings, wherein:
figure 1 is a perspective view of a tube clamp according to the invention;
figure 2 is a front view of a tube clamp according to the invention in an open state;
figure 3 is a view of a tube clamp according to the invention in a closed state, with the tube in the standard position.

### Ways of carrying out the Invention

With reference to the above figures, reference numeral 10 generally designates a monolithic tube clamp made of plastics, according to the invention.

The tube clamp 10 comprises two wings 11 and 12, which are both curved and protrude from a base 13 which has a rectangular plan and is centrally crossed by a hole 14 for a fixing means which is not illustrated in the figures.

Each one of the two wings has an articulation region 15a and 15b, proximate to the base 13, which is provided by means of a reduction in the cross-section of the corresponding wing 11 and 12.

Said reductions in cross-section produce a localized reduction in rigidity in each one of the wings 11 and 12, allowing their articulation.

As regards the remaining part of the wings, whilst in the wing 12 the rigidity remains substantially constant, in the wing 11 there is provided a further articulation region described more clearly hereinafter.

In each one of the two wings 11 and 12, the corresponding free end 16 and 17 is furthermore shaped so as to form a corresponding hook 18 and 19.

The hooks 18 and 19 are arranged so as to be directed towards each other and thus provide mutual engagement by snap-action closure.

When the two wings 11 and 12 are in a closed state, they form a first portion of a seat 20 for the tube 21.

The tube clamp 10 comprises a link strap 22 which connects the two wings 11 and 12 in corresponding regions 23 and 24, each whereof is located at an intermediate point between the corresponding articulation region 15a and 15b and the corresponding end engagement region constituted by the hook 18 and 19 of the corresponding wing 11 and 12.

In the region connecting link strap 22 and wing 11, a cross-section reduction 25 of the wing forms, for the wing, the above-mentioned additional articulation region, which has the purpose of improving the engagement between hooks 18 and 19.

The link strap 22 is significantly less rigid than the wings 11 and 12 and is substantially a structural element which can be likened to a cord and is not required to have resistance to flexural deformations.

Each one of the wings 11 and 12 forms, together with the link strap 22, a second-class lever in which the fulcrum is located at respective articulation regions 25, 15a, and 15b, the force is located at the respective regions 23 and 24 whereat the link strap 22 acts, and the resistance is located at the corresponding hook 18 and 19.

The presence of the hinge 25 of course entails a difference in the lever arms of the two wings.

The link strap 22 also has two curved regions 26 with diversified flexing, the convexities whereof lie away from the surface of the tube 21 in the standard position.

The link strap 22 also has a through hole 27 which corresponds to the hole 14 and is also meant for the passage of the fixing means.

The link strap 22 also forms a second portion which completes the seat 20 and has such a length that even with its maximum overall flexing it does not interfere with the base 13.

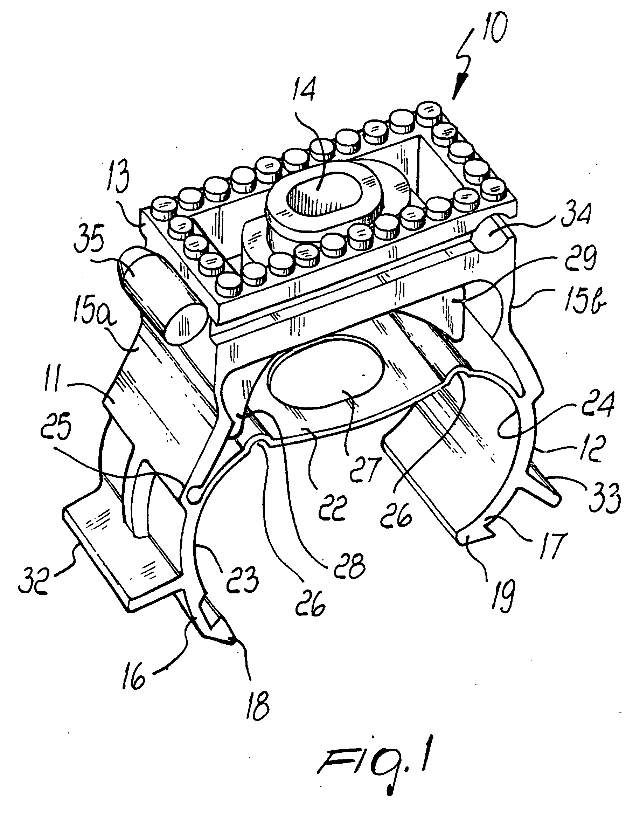

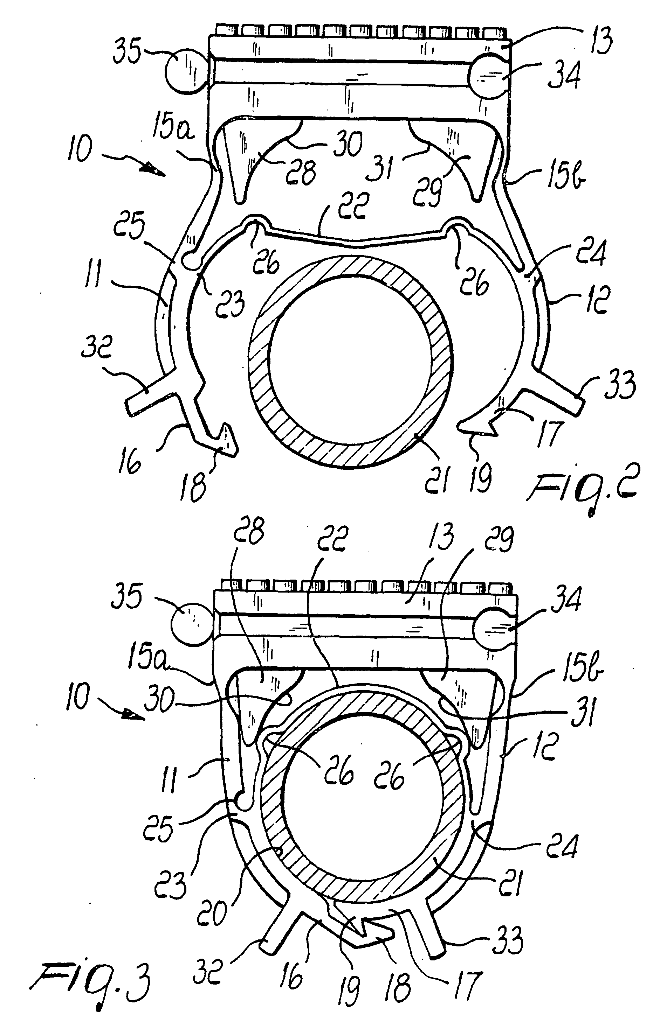

Respective contrast walls 28 and 29 protrude, between the base 13 and the link strap 22, on the regions that connect the wings 11 and 12 to the base 13; these walls have curved surfaces 30 and 31 which are directed towards the link strap 22, substantially have the same curvature when it is in the operating configuration of figure 3, and constitute rests for the regions 26.

Finally, on the tube clamp 10 there are also two raised grip portions 32 and 33, each whereof protrudes from a corresponding wing 11 and 12 in an outward direction with respect to the seat 20, and a groove 34 and a protrusion 35, both of which are partially cylindrical and are formed on opposite sides of the base 13 for the parallel coupling of a plurality of clamps 10.

In practice, operation is as follows: when the installer must fix the tube 21 to the tube clamp 10, he pushes it against the link strap 22.

The link strap 22, by acting on the wings 11 and 12 at the corresponding regions 23 and 24, induces, according to the operating principle of a second-class lever, the mutual snap-action closure of the hooks 18 and 19.

Of course, in order to achieve the closure of the hooks 18 and 19 the tube must be pushed beyond the standard position during installation, making use of the flexibility of the two curved regions 26.

The hinge region 25 forms, together with the region 15, two rotation centers on the wing 11 of the female hook, with the purpose of reducing the tensions or stresses which can occur during use, avoiding the disengagement of the clamp from the tube 21.

It is also evident that the link strap 22 can never interfere with the base 13, even upon maximum flexing, on penalty of preventing the automatic closure of the tube 21.

Finally, it is noted that the curved regions 26 formed on the link strap 22 allow to adapt the device to the differences in diameter of the tubes caused by size tolerances, and since they are substantially more rigid than the rest of the link strap 22 they flex only when the maximum flexibility of the link strap has been utilized.

The walls 28 and 29 act as guides for the insertion of the tube 21 at right angles to the base 13, spread the load by bearing part of the weight of the tube because of the resting contact of the link strap 22, and also have a stiffening function, limiting the intrinsic weakness of the tube clamp which would be caused by the hinge regions.

In practice it has been observed that the intended aim and objects have been achieved.

It should in fact be noted that the tube, once installed in its standard position, is retained in the seat around its entire diameter, and this allows greater and more complete retention in all directions.

## Claims

1. A monolithic tube clamp made of plastics, comprising:
two curved wings (11, 12) which protrude from a base (13) which can be anchored, each one of said two wings (11, 12) having an articulation region (15a, 15b) proximate to said base and a hook-shaped mutual engagement end region (16, 17) defining a hook (18, 19), the hooks of said wings being directed towards each other and being able to engage each other, providing a snap-together closure, said two wings forming, when the closing action has stabilized, a first portion of a seat (20) for a tube (21) in standard position; and
a link strap (22) which connects said two wings (11, 12);
**characterized in that** said link strap (22) connects said two wings (11, 12) in regions (23, 24) thereof which are respectively located at a point which is intermediate between the corresponding articulation region (15a, 15b) and the corresponding mutual engagement end region (16, 17), each one of said two wings forming a second-class lever together with said link strap (22), said link strap forming a second portion for completing said seat (20), the tube (21) being pushable beyond the standard position, together with said link strap, by such an extent as to allow the snap-action closure of said hooks owing to the traction applied to the wings,

2. The tube clamp according to claim 1, **characterized in that** one of said wings (11, 12) has a substantially constant rigidity along its entire length, said articulation region (15a, 15b) having a reduced cross-section which causes reduced rigidity and a consequent possibility of articulation.

3. The tube clamp according to claim 1, **characterized in that** one (11) of said wings (11, 12) has another articulation region in the region for connection to said link strap ()22) formed by a cross-section reduction (25) of said wing (11).

4. The tube clamp according to claim 1, **characterized in that** said link strap (22) is substantially less rigid than the wings (11, 12).

5. The tube clamp according to claim 1, **characterized in that** said link strap (22) has at least one curved region (26) with diversified flexibility.

6. The tube clamp according to claim 5, **characterized in that** said at least one curved region (26) has a convexity which is directed away from the surface of the tube (21) in the standard position.

7. The tube clamp according to claim 6, **characterized in that** at least said one curved region (26) is more rigid than the remaining regions of said link strap (22).

8. The tube clamp according to claim 1, **characterized in that** said link strap (22) has such a length that it does not interfere with said base (13).

9. The tube clamp according to claim 1, **characterized in that** respective contrast walls (28, 29) protrude on the regions that connect said wings (11, 12) to said base (13), between the base (13) and the link strap (22), said walls (28, 29) having corresponding curved surfaces (30, 31) which are directed towards the link strap (22), have substantially the same curvature when said link strap is in the active position, and constitute supports for the curved regions (26) of said link strap (22).

10. The tube clamp according to claim 1, **characterized in that** said link strap (22) has a through hole (27) for the passage of fixing means.

## Patentansprüche

1. Monolithische Rohrklemme aus Kunststoff mit:
zwei gebogenen Flügeln (11, 12), die von einer verankerbaren Basis (13) hervorstehen, jeder der beiden Flügel (11, 12) weist einen Gelenkbereich (15a, 15b) nahe bei der Basis sowie einen hakenförmigen Endbereich (16, 17), der einen Haken (18, 19) ausbildet, zum gegenseitigen Ineinandergreifen auf, die Haken der Flügel sind in Richtung aufeinander gerichtet und können miteinander in Eingriff treten, um einen Schnappverschluss bereit zu stellen, wobei die beiden Flügel einen ersten Bereich eines Sitzes (20) für ein Rohr (21) in einer Standardposition bereit, wenn der Verschlussvorgang lagefest gemacht wurde; und
einem Verbindungsband (22), das die beiden Flügel (11, 12) verbindet;
**dadurch gekennzeichnet, dass** das Verbindungsband (22) die beiden Flügel (11, 12) in denjenigen Bereichen (23, 24) verbindet, die jeweils an einem Punkt angeordnet sind, der zwischen dem entsprechenden Gelenkbereich (15a, 15b) und dem entsprechenden Endbereich (16, 17) zum gegenseitigen Ineinandergreifen angeordnet ist, jeder der beiden Flügel bildet zusammen mit dem Verbindungsband (22) einen einarmigen Hebel mit Kraftangriff außerhalb des Lastgriffes, das Verbindungsband bildet einen zweiten Bereich zur Vervollständigung des Sitzes (20), das Rohr (21) ist über die Standardposition hinaus verschiebbar, zusammen mit dem Verbindungsband in solch einem Maße, um den Schnappbetätigungsverschluß der Haken auf Grund der auf die Flügel ausgeübten Zugkraft zu ermöglichen.

2. Rohrklemme nach Anspruch 1, **dadurch gekennzeichnet, dass** einer der Flügel (11, 12) eine im wesentlichen konstante Festigkeit über seine gesamte Länge aufweist, wobei der Gelenkbereich (15a, 15b) einen verringerten Querschnitt aufweist, was eine verringerte Festigkeit und eine daraus folgende Einsatzmöglichkeit als Gelenk zur Folge hat.

3. Rohrklemme nach Anspruch 1, **dadurch gekennzeichnet, dass** einer (11) der Flügel (11, 12) einen weiteren Gelenkbereich in dem Bereich der Verbindung mit dem Verbindungsband (22) aufweist, der durch eine Querschnittsverringerung (25) des Flügels (11) ausgebildet ist.

4. Rohrklemme nach Anspruch 1, **dadurch gekennzeichnet, dass** das Verbindungsband im wesentlichen weniger steif als die Flügel (11, 12) ist.

5. Rohrklemme nach Anspruch 1, **dadurch gekennzeichnet, dass** das Verbindungsband (22) zumindest einen gebogenen Bereich (26) mit abweichender Flexibilität aufweist.

6. Rohrklemme nach Anspruch 5, **dadurch gekennzeichnet, dass** der zumindest eine gebogene Bereich (26) eine Wölbung aufweist, die von der Oberfläche des Rohres (21) in der Standardposition weg gerichtet ist.

7. Rohrklemme nach Anspruch 6, **dadurch gekennzeichnet, dass** der zumindest eine gebogene Bereich (26) steifer als die übrigen Bereiche des Verbindungsbandes (22) ist.

8. Rohrklemme nach Anspruch 1, **dadurch gekennzeichnet, dass** das Verbindungsband (22) solch eine Länge aufweist, dass es nicht mit der Basis (13) störend kollidiert.

9. Rohrklemme nach Anspruch 1, **dadurch gekennzeichnet, dass** jeweils Kontrastwände (28, 29) von denjenigen Bereichen zwischen der Basis (13) und dem Verbindungsband (22) hervorstehen, die die Flügel (11, 12) mit der Basis (13) verbinden, die Wände (28, 29) haben entsprechend gebogene Oberflächen (30, 31), die in Richtung auf das Verbindungsband (22) gerichtet sind und im wesentlichen die gleiche Krümmung aufweisen, wenn das Verbindungsband sich in der Wirkstellung befindet und bilden Stützstellen für die gebogenen Bereiche (26) des Verbindungsbandes (22).

10. Rohrklemme nach Anspruch 1, **dadurch gekennzeichnet, dass** das Verbindungsband (22) ein Durchgangsloch (27) für den Durchgang von Befestigungsmitteln aufweist.

## Revendications

1. Pince monolithe en matière plastique pour tube, comprenant :
deux ailes incurvées (11, 12) qui font saillie depuis une base accrochable(13), chacune desdites deux ailes (11, 12) ayant une région d'articulation (15a, 15b) à proximité immédiate de ladite base et une région d'extrémité crochue définissant un crochet (18, 19) d'accrochage mutuel, les crochets desdites ailes étant orientés l'un vers l'autre et pouvant s'accrocher l'un à l'autre, réalisant une fermeture rapide, lesdites deux ailes formant, lorsque l'action de fermeture s'est stabilisée, une première partie d'un siège (20) pour un tube (21) dans une position normale ; et
un étrier de liaison (22) qui relie lesdites deux ailes (11, 12);
**caractérisée en ce que** ledit étrier de liaison (22) relie lesdites deux ailes (11, 12) dans des régions (23, 24) de celles-ci qui se trouvent respectivement en un point intermédiaire entre la région d'articulation correspondante (15a, 15b) et la région correspondante d'extrémité d'accrochage mutuel (16, 17), chacune desdites deux ailes formant un levier auxiliaire avec ledit étrier de liaison (22), ledit étrier de liaison formant une seconde partie pour compléter ledit siège (20), le tube (21) pouvant être poussé au-delà de la position normale, conjointement avec ledit étrier de liaison, dans une mesure suffisant pour permettre la fermeture rapide desdits crochets du fait de la traction exercée sur les ailes.

2. Pince pour tube selon la revendication 1, **caractérisée en ce qu'**une desdites ailes (11, 12) a une rigidité sensiblement constante sur toute sa longueur, ladite région d'articulation (15a, 15b) ayant une section transversale réduite qui crée une rigidité réduite et par conséquent une possibilité d'articulation.

3. Pince pour tube selon la revendication 1, **caractérisée en ce qu'**une (11) desdites ailes (11, 12) a, dans la région de liaison avec ledit étrier de liaison (22), une autre région d'articulation formée par une réduction de section transversale (25) de ladite aile (11).

4. Pince pour tube selon la revendication 1, **caractérisée en ce que** ledit étrier de liaison (22) est sensiblement moins rigide que les ailes (11, 12).

5. Pince pour tube selon la revendication 1, **caractérisée en ce que** ledit étrier de liaison (22) a au moins une région incurvée (26) à flexibilité diversifiée.

6. Pince pour tube selon la revendication 5, **caractérisée en ce que** ladite au moins une région incurvée (26) a une convexité orientée à l'opposé de la surface du tube (21) dans la position normale.

7. Pince pour tube selon la revendication 6, **caractérisée en ce que** ladite au moins une région incurvée (26) est plus rigide que les autres régions dudit étrier de liaison (22).

8. Pince pour tube selon la revendication 1, **caractérisée en ce que** ledit étrier de liaison (22) a une longueur telle qu'elle n'interfère pas avec ladite base (13).

9. Pince pour tube selon la revendication 1, **caractérisée en ce que** des parois d'opposition respectives (28, 29) font saillie sur les régions qui relient lesdites ailes (11, 12) à ladite base (13), entre la base (13) et l'étrier de liaison (22), lesdites parois (28, 29) ayant des surfaces incurvées correspondantes (30, 31) qui sont orientées vers l'étrier de liaison (22), ont sensiblement la même courbure lorsque ledit étrier de liaison est dans la position active et constituent des supports pour les régions incurvées (26) dudit étrier de liaison (22).

10. Pince pour tube selon la revendication 1, **caractérisée** et en ce que ledit étrier de liaison (22) a un trou traversant (27) pour le passage de moyens de fixation.
